(19) Europäisches Patentamt
European Patent Office
Office européen des brevets

(11) EP 2 130 871 A1

(12) # EUROPEAN PATENT APPLICATION
published in accordance with Art. 153(4) EPC

(43) Date of publication:
**09.12.2009 Bulletin 2009/50**

(21) Application number: **08739930.9**

(22) Date of filing: **31.03.2008**

(51) Int Cl.:
***C08L 67/04*** *(2006.01)* ***B29C 45/00*** *(2006.01)*
***B29K 67/00*** *(2006.01)* ***C08L 101/16*** *(2006.01)*

(86) International application number:
**PCT/JP2008/056824**

(87) International publication number:
**WO 2008/120821 (09.10.2008 Gazette 2008/41)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **29.03.2007 JP 2007089270**

(71) Applicants:
- **Teijin Limited**
  **Osaka-shi, Osaka 541-0054 (JP)**
- **Musashino Chemical Laboratory, Ltd.**
  **Chuo-ku**
  **Tokyo 104-0031 (JP)**

(72) Inventors:
- **TOYOHARA, Kiyotsuna**
  **Iwakuni-shi**
  **YAMAGUCHI 740-0014 (JP)**
- **NONOKAWA, Ryuji**
  **Iwakuni-shi**
  **YAMAGUCHI 740-0014 (JP)**
- **ENDO, Kohei**
  **Iwakuni-shi**
  **YAMAGUCHI 740-0014 (JP)**
- **TO, Shin**
  **Tokyo 104-0031 (JP)**

(74) Representative: **Hallybone, Huw George et al**
**Carpmaels & Ransford**
**43-45 Bloomsbury Square**
**London WC1A 2RA (GB)**

(54) **POLYLACTIC ACID COMPOSITION**

(57) It is an object of the present invention to provide a composition comprising polylactic acid and having improved injection moldability and an injection molded product thereof.

The object of the present invention is attained by a specific polylactic acid composition which meets the following requirements (a) to (g) at the same time:
(a) it must have a weight average molecular weight of 70,000 to 700,000;
(b) the total content of Sn atom, Ti atom, Al atom and Ca atom must be 3 to 20 ppm;
(c) it must contain a P atom in an amount of 3 to 3,000 ppm;
(d) the (total number of gram-atoms of Sn, Ti, Al and Ca)/(number of gram-atoms of P) value must be 0.01 to 5;
(e) the content of a compound having a molecular weight of 150 or less must be not more than 0.2 wt%;
(f) the COOH terminal group concentration must be not more than 30 equivalents/ton; and
(g) the melt viscosity (P) at a melting temperature of 230°C must satisfy the following expression (1) :

$$10\ Pa{\cdot}s < P < 100\ Pa{\cdot}s \qquad (1).$$

EP 2 130 871 A1

## Description

### TECHNICAL FIELD

The present invention relates to a composition comprising polylactic acid. More specifically, it relates to a composition comprising polylactic acid and having improved injection moldability and to an injection molded product thereof.

### BACKGROUND ART

Most plastics derived from petroleum are light in weight, tough and durable, can be molded easily and arbitrarily and have been mass-produced to support our lives in many ways. However, when these plastics are thrown away into the environment, they are not easily decomposed and are accumulated. When they are burnt, they release a large amount of carbon dioxide, thereby accelerating global warming.

In view of this situation, researches into resins obtained from non-oil raw materials or biodegradable plastics which are degraded by microorganisms are now actively under way. Most of the biodegradable plastics which are now under study have an aliphatic carboxylic acid ester unit and are easily degraded by microorganisms. On the other hand, they have low heat stability and a serious problem such as a reduction in their molecular weights or the deterioration of their colors in the step where they are exposed to a high temperature, such as melt spinning, injection molding or melt film formation.

Although polylactic acid, out of these, is a plastic which has excellent heat resistance and good balance between hue and mechanical strength, as compared with petrochemical-based polyesters typified by polyethylene terephthalate and polybutylene terephthalate, it is inferior in moldability, especially injection moldability. To overcome this situation, various studies have been made, such as a method in which a copolymer of polylactic acid and another aliphatic polyester is added to polylactic acid (patent document 1) and a method in which polylactic acid is blended with a polyolefin (patent document 2) for the improvement of the moldability of polylactic acid. However, they are still unsatisfactory.

(Patent Document 1) JP-A 2006-342361
(Patent Document 2) JP-A 2007-9008

### DISCLOSURE OF THE INVENTION

It is an object of the present invention to provide a polylactic acid composition having improved injection moldability and an injection molded product thereof.

The inventors of the present invention have found that the injection moldability of a polylactic acid composition is improved by controlling the total content of specific metal atoms in polylactic acid and has attained the present invention.

That is, the present invention is a polylactic acid composition which comprises:

(A) 30 to 70 parts by weight of polylactic acid (A) comprising not less than 90 mol% of an L-lactic acid unit and less than 10 mol% of a D-lactic acid unit and/or a comonomer unit except for lactic acid; and
(B) 70 to 30 parts by weight of polylactic acid (B) comprising not less than 90 mol% of a D-lactic acid unit and less than 10 mol% of an L-lactic acid unit and/or a comonomer unit except for lactic acid,
and which meets the following requirements (a) to (g) at the same time:

(a) it must have a weight average molecular weight of 70,000 to 700,000;
(b) the total content of Sn atom, Ti atom, Al atom and Ca atom must be 3 to 3,000 ppm;
(c) it must contain a P atom in an amount of 0.01 to 3,000 ppm;
(d) the (total number of gram-atoms of Sn, Ti, Al and Ca) / (number of gram-atoms of P) value must be 0.01 to 5;
(e) the content of a compound having a molecular weight of 150 or less must be not more than 0.2 wt%;
(f) the COOH terminal group concentration must be not more than 30 equivalents/ton; and
(g) the melt viscosity (P) at a melting temperature of 230°C must satisfy the following expression (1) :

$$10\ Pa\cdot s < P < 100\ Pa\cdot s \qquad (1).$$

Further, the present invention is an injection molded product which comprises:

(A) 30 to 70 parts by weight of polylactic acid (A) comprising not less than 90 mol% of an L-lactic acid unit and less than 10 mol% of a D-lactic acid unit and/or a comonomer unit except for lactic acid; and
(B) 70 to 30 parts by weight of polylactic acid (B) comprising not less than 90 mol% of a D-lactic acid unit and less than 10 mol% of an L-lactic acid unit and/or a comonomer unit except for lactic acid,

and which meets the following requirements (a) to (g) at the same time:

(a) it must have a weight average molecular weight of 100,000 to 500,000;
(b) the total content of Sn atom, Ti atom, Al atom and Ca atom must be 5 to 300 ppm;
(c) it must contain a P atom in an amount of 20 to 5,000 ppm;
(d) the (total number of gram-atoms of Sn, Ti, Al and Ca)/(number of gram-atoms of P) value must be 0.01 to 5;
(e) the content of a compound having a molecular weight of 150 or less must be not more than 0.1 wt%;
(f) the COOH terminal group concentration must be not more than 30 equivalents/ton; and
(g) the melt viscosity (P) at a melting temperature of 230°C must satisfy the following expression (1) :

$$10\ Pa \cdot s < P < 100\ Pa \cdot s \qquad (1).$$

It is also included in the present invention that the polylactic acid unit A and the polylactic acid unit B form a stereocomplex crystal in the injection molded product.

BEST MODE FOR CARRYING OUT THE INVENTION

In the present invention, polylactic acid is a polymer which contains an L-lactic acid unit or a D-lactic acid unit represented by the following formula, or a combination of these as the maim component. The polylactic acid includes the polylactic acid (A) and the polylactic acid (B).

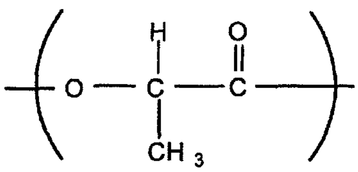

The polylactic acid (A) is a polymer which contains an L-lactic acid unit as the main component. The poly-L-lactic acid contains preferably 90 to 100 mol%, more preferably 95 to 100 mol%, much more preferably 98 to 100 mol% of an L-lactic acid unit. Other units are a D-lactic acid unit and a unit except for lactic acid. The total amount of the D-lactic acid unit and the unit except for lactic acid is preferably 0 to 10 mol%, more preferably 0 to 5 mol%, much more preferably 0 to 2 mol%.
The polylactic acid (B) is a polymer which contains a D-lactic acid unit as the main component. The poly-D-lactic acid contains preferably 90 to 100 mol%, more preferably 95 to 100 mol%, much more preferably 98 to 100 mol% of a D-lactic acid unit. Other units are an L-lactic acid unit and a unit except for lactic acid. The total amount of the L-lactic acid unit and the unit except for lactic acid is preferably 0 to 10 mol%, more preferably 0 to 5 mol%, much more preferably 0 to 2 mol%.
Examples of the unit except for lactic acid contained in the poly-L-lactic acid and the poly-D-lactic acid include units derived from dicarboxylic acids, polyhydric alcohols, hydroxycarboxylic acids and lactones having a functional group capable of forming at least two ester bonds and units derived from polyesters, polyethers and polycarbonates comprising these as constituent components.
The dicarboxylic acids include succinic acid, adipic acid, azelaic acid, sebacic acid, terephthalic acid and isophthalic acid. The polyhydric alcohols include aliphatic polyhydric alcohols such as ethylene glycol, propylene glycol, butanediol, pentanediol, hexanediol, octanediol, glycerin, sorbitan, neopentyl glycol, diethylene glycol, triethylene glycol, polyethylene glycol and polypropylene glycol, and aromatic polyhydric alcohols such as an adduct of bisphenol with ethylene oxide. The hydroxycarboxylic acids include glycolic acid and hydroxybutyric acid. The lactones include glycolide, ε-caprolactone glycolide, ε-caprolactone, β-propiolactone, δ-butyrolactone, β- or γ-butyrolactone, pivalolactone and δ-valerolactone.

In the polylactic acid composition of the present invention, the weight ratio of the above polylactic acid (A) to the above polylactic acid (B) must be 30:70 to 70:30, preferably 45:55 to 55:45 based on the total weight of the polylactic acid (A) and the polylactic acid (B). Outside this range, heat resistance cannot be ensured.

The polylactic acid composition of the present invention meets the following requirements (a) to (g). A description is subsequently given of each of the requirements.

(requirement (a))

The weight average molecular weight of the polylactic acid composition of the present invention is 70,000 to 700,000, preferably 100,000 to 500,000, more preferably 150,000 to 350,000. Within this range, physical properties which are satisfactory for practical use are obtained. The weight average molecular weight is a value in terms of standard polystyrene measured by gel permeation chromatography (GPC) using chloroform as an eluant. The polylactic acid composition having a weight average molecular weight within the above range is obtained by melt kneading together the polylactic acid (A) and the polylactic acid (B), both having a weight average molecular weight of 70,000 to 700,000, preferably 100,000 to 500,000, more preferably 150,000 to 350,000.

(requirement (b))

The total content (metal content) of the Sn atom, Ti atom, Al atom and Ca atom in the polylactic acid composition of the present invention is 3 to 3,000 ppm, preferably 1 to 15 ppm, more preferably 1 to 10 ppm based on the total weight of the polylactic acid composition. These atoms are derived from a catalyst used to produce the polylactic acid (A) and the polylactic acid (B). Outside this range, melt stability is greatly impaired disadvantageously.

The polylactic acid composition having a metal content within the above range is obtained from the polylactic acid (A) and the polylactic acid (B) produced by using these metals as a catalyst. That is, the polylactic acid (A) and the polylactic acid (B) are preferably produced by using 3 to 3,000 mg, preferably 3 to 20 ppm, more preferably 3 to 15 ppm of these metal atoms as a catalyst based on 1 kg of lactide.

(requirement (c))

The content of the P atom in the polylactic acid composition of the present invention is 0.01 to 3,000 ppm, preferably 10 to 2,000 ppm, more preferably 45 to 1,000 ppm based on the total weight of the polylactic acid composition. The P atom is derived from a catalyst deactivator or a stabilizer used to produce the polylactic acid (A) and the polylactic acid (B). Outside this range, long-term durability is impaired.

The polylactic acid composition having a P atom content within the above range is obtained from the polylactic acid (A) and the polylactic acid (B) which are produced from a compound containing a P atom as a catalyst deactivator or a stabilizer. The polylactic acid (A) and the polylactic acid (B) are preferably produced by using a catalyst deactivator or a stabilizer to ensure that the content of the P atom is 0.01 to 3,000 mg, preferably 50 to 2,000 mg, more preferably 50 to 1,000 mg based on 1 kg of lactide. Preferred examples of the compound containing a P atom include phosphoric acid condensates such as phosphoric acid esters, phosphoric acids, phosphorous acid esters, phosphorous acids, hypophosphorous acid esters, hypophosphorous acids, metaphosphoric acids and polyphosphoric acids, salts thereof and acetyl phosphites.

(requirement (d))

The polylactic acid composition of the present invention must have a (total number of gram-atoms of Sn, Ti, Al and Ca)/(number of gram-atoms of P) value of 0.01 to 5. The number of gram-atoms of each of Sn, Ti, Al, Ca and P means the number of moles. The polylactic acid composition which meets the above condition is obtained by adjusting the weight ratio of the catalyst and the catalyst deactivator or stabilizer at the time of producing the polylactic acid (A) and the polylactic acid (B).

(requirement (e))

The content of the compound having a molecular weight of 150 or less in the polylactic acid composition of the present invention is not more than 0.2 wt%, preferably not more than 0.04 wt%, more preferably not more than 0.02 wt% based on the polylactic acid composition. Outside this range, long-term durability greatly lowers. Examples of the compound having a molecular weight of 150 or less include lactide and lactic acid. However, the compound is not limited to these. The polylactic acid composition which meets the above condition is obtained from the polylactic acid (A) and the polylactic acid (B) from which the compound having a molecular weight of 150 or less has been removed by depressurizing the inside of the reaction system at the time of production. Depressurizing the inside of the system at the time of melt kneading together the polylactic acid (A) and the polylactic acid (B) is also effective.

(requirement (f))

The polylactic acid composition of the present invention has a carboxyl terminal group concentration of not more than 30 equivalents/ton, preferably not more than 10 equivalents/ton, more preferably not more than 8 equivalents/ton. Outside this range, hydrolysis resistance degrades. The polylactic acid composition which meets the above condition is obtained by reducing the amount of the carboxylic acid contained in the raw material to less than 4 equivalents/ton and the amount of the residual water to less than 30 ppm.

(requirement (g))

The melt viscosity (P) of the polylactic acid composition of the present invention must satisfy the following expression (1) at a melting temperature of 230°C.

$$10 \text{ Pa·s} < P < 100 \text{ Pa·s} \qquad (1)$$

In the expression (1), when the melt viscosity falls within this range, the molding of a preform can be easily carried out. The polylactic acid composition which meets the above condition is obtained by adjusting its weight average molecular weight in terms of styrene measured by gel permeation chromatography to 100, 000 or more and the melting point of the resin to a temperature higher than 200°C.

<method of producing polylactic acid composition>

The composition of the present invention can be produced by melt kneading together the polylactic acid (A) and the polylactic acid (B).

The polylactic acid (A) and the polylactic acid (B) can be produced by heating L- or D-lactide in the presence of a metal catalyst to ring-opening polymerize it. They can also be produced by crystallizing a polylactic acid having a low molecular weight and containing a metal catalyst and heating it in reduced pressure or in an inert gas stream to solid-phase polymerize it. Further, they can also be produced by a direct polymerization method in which lactic acid is dehydrated and condensed in the presence or absence of an organic solvent.

The polymerization reaction can be carried out in a conventionally known reactor, for example, vertical reactors equipped with a high viscosity stirring blade such as helical ribbon blade, which may be used alone or in combination. An alcohol may be used as a polymerization initiator. The alcohol preferably does not impede the polymerization of polylactic acid and is nonvolatile, as exemplified by decanol, dodecanol, tetradecanol, hexadecanol, octadecanol, ethylene glycol, triethylene glycol and benzyl alcohol.

In the solid-phase polymerization method, a relatively low-molecular weight lactic acid polyester obtained by the above ring-opening polymerization or the direct polymerization of lactic acid is used as a prepolymer. It is preferred from the viewpoint of preventing fusion that the prepolymer should be crystallized at a temperature of its glass transition temperature (Tg) or higher and lower than its melting point (Tm) in advance. The crystallized prepolymer is charged into a fixed vertical reactor or a rotary reactor such as tumbler or kiln and heated at a temperature of the glass transition temperature (Tg) or higher and lower than the melting point (Tm) of the prepolymer. There will be no problem if the polymerization temperature is raised stepwise along with the proceeding of polymerization. It is also preferred as a method used in combination that the inside of the reactor should be depressurized or the heated inert gas stream should be circulated in order to remove water generated during solid-phase polymerization efficiently.

The metal catalyst used to produce the polylactic acid (A) and the polylactic acid (B) is a compound which contains at least one metal selected from the group consisting of alkali earth metals, rare earth metals, transition metals in the third row of the periodic table, aluminum, germanium, tin and antimony. The alkali earth metals include magnesium, calcium and strontium. The rare earth metals include scandium, yttrium, lanthanum and cerium. The transition metals in the third row of the periodic table include iron, cobalt, nickel and zinc.

The metal catalyst can be added to the composition as a carboxylate, alkoxide, aryloxide or enolate of β-diketone of one of these metals. When polymerization activity and hue are taken into consideration, tin octylate, titanium tetraisopropoxide and aluminum triisopropoxide are particularly preferred.

The content of the metal catalyst is not less than 0.001 part by weight and less than 1 part by weight, preferably not less than 0.005 and less than 0.1 part by weight based on 100 parts by weight of the polylactic acid. When the

content of the metal catalyst is too low, the polymerization rate greatly drops disadvantageously. When the content is too high, the coloring of polylactic acid by reaction heat or the coloring of a carbodiimide-based compound is promoted, and the hue and heat stability of the obtained composition become worse.

<injection molded product>

A description is subsequently given of the injection molded product of the present invention.

The injection molded product of the present invention comprises 30 to 70 parts by weight of the polylactic acid (A) and 70 to 30 parts by weight of the polylactic acid (B) and meets the following requirements (a) to (g) at the same time. A description is subsequently given of each of the requirements.

(requirement (a))

The weight average molecular weight of the injection molded product of the present invention is 100, 000 to 500,000, preferably 150,000 to 350,000. Within this range, the injection molded product has excellent physical properties. The weight average molecular weight is a value in terms of standard polystyrene measured by gel permeation chromatography (GPC) using chloroform as an eluant. The injection molded product having a weight average molecular weight within the above range is obtained by injection molding the polylactic acid composition of the present invention having a weight average molecular weight of 70, 000 to 700,000.

(requirement (b))

The total content (metal content) of the Sn atom, Ti atom, Al atom and Ca atom in the injection molded product of the present invention is 5 to 300 ppm, preferably 5 to 150 ppm, more preferably 5 to 20 ppm based on the total weight of the injection molded product. Outside this range, melt stability is impaired and depolymerization proceeds disadvantageously. The injection molded product having a metal content within the above range is obtained by injection molding the polylactic acid composition of the present invention having a total content (metal content) of the Sn atom, Ti atom, Al atom and Ca atom of 3 to 3,000 ppm.

(requirement (c))

The content of the P atom in the injection molded product of the present invention is 20 to 5,000 ppm, preferably 50 to 2,000 ppm, more preferably 50 to 1,000 ppm based on the total weight of the injection molded product. Outside this range, long-term durability greatly lowers. The injection molded product having a P atom content within the above range is obtained by injection molding the polylactic acid composition of the present invention.

(requirement (d))

The polylactic acid composition of the present invention must have a (total number of gram-atoms of Sn, Ti, Al and Ca)/(number of gram-atoms of P) value of 0.01 to 5. The number of gram-atoms of each of Sn, Ti, Al, Ca and P means the number of moles. The injection molded product which meets the above condition is obtained by injection molding the polylactic acid composition of the present invention.

(requirement (e))

The injection molded product of the present invention has a content of a compound having a molecular weight of 150 or less of not more than 0.1 wt%, preferably not more than 0.05 wt%, more preferably not more than 0.02 wt% based on the polylactic acid composition. Outside this range, long-term durability greatly lowers. Examples of the compound having a molecular weight of 150 or less include lactide and lactic acid. The compound is not limited to these. The injection molded product which meets the above condition is obtained by injection molding the polylactic acid composition of the present invention.

(requirement (f))

The injection molded product of the present invention has a carboxyl terminal group concentration of not more than 30 equivalents/ton, preferably not more than 15 equivalents/ton, more preferably not more than 10 equivalents/ton. Outside this range, hydrolysis resistance degrades. The injection molded product which meets the above condition is obtained by injection molding the polylactic acid composition of the present invention.

(requirement (g))

The injection molded product of the present invention has a melt viscosity (P) which satisfies the following expression (1) at a melting temperature of 230°C.

$$10\ Pa{\cdot}s < P < 100\ Pa{\cdot}s \qquad (1)$$

In the expression (1), when the melt viscosity falls within this range, the molding of the preform can be easily carried out. The injection molded product which meets the above condition is obtained by injection molding the polylactic acid composition of the present invention.

In the present invention, preferably, the polylactic acid (A) and the polylactic acid (B) form a stereocomplex crystal in the injection molded product. The content of the stereocomplex crystal is preferably 80 to 100 %, more preferably 95 to 100 %.

The term "stereocomplex crystal" as used herein means that the proportion of a melting peak at 195°C or higher out of the melting peaks in the temperature elevation step in the differential scanning calorimeter (DSC) measurement of a sample is preferably not less than 80 %, more preferably not less than 90 %, much more preferably not less than 95 %. The melting point is in the range of preferably 195 to 250°C, more preferably 200 to 220°C. The melting enthalpy is not less than 20 J/g, preferably not less than 30 J/g. Stated more specifically, it is preferred that the proportion of the melting peak at 195°C or higher out of the melting peaks in the temperature elevation step in the differential canning calorimeter (DSC) measurement should be not less than 90 %, the melting point should be 195 to 250°C, and the melting enthalpy should be not less than 20 J/g. The stereocomplex crystal can be formed by crystallization after the injection molded product is obtained.

In the present invention, to obtain the injection molded product, any known injection molding technique may be employed. For example, a general cold runner system may be employed. A hot runner system may also be employed. For this injection molding, injection compression molding, injection press molding, gas assist injection molding, foam molding (including molding comprising the injection of a supercritical fluid), insert molding, in-mold coating molding, adiabatic metal molding, quick heating and cooling metal molding, two-color molding, sandwich molding and super high-speed injection molding may be employed. The advantages of these molding techniques are widely known.

The molding temperature (specifically, the metal mold temperature of a molding machine) in this case is 90 to 150°C, preferably 90 to 130°C.

Examples

The following examples are provided for the purpose of further illustrating the present invention but are in no way to be taken as limiting. In the examples, the physical properties of the composition were measured by the following methods.

(1) measurement of weight average molecular weight (Mw)

The weight average molecular weight (Mw) was measured with the GPC-11 of Showdex Co., Ltd. by dissolving 50 mg of the composition in 5 ml of chloroform at 40°C. The weight average molecular weight (Mw) was calculated as a value in terms of polystyrene.

(2) measurement of amounts of Sn atom, Ti atom, Al atom, Ca atom and P atom

These were obtained by IPC.

(3) measurement of number of gram-atoms of Sn, Ti, Al, Ca and P

These were obtained from the amounts of these elements at the time of addition.

(4) measurement of content of compound having a molecular weight of 150 or less

This was obtained by GPC.

(5) measurement of COOH terminal group concentration

This was obtained by a neutralizing titration method.

(6) measurement of melt viscosity

This was obtained by dissolving in E sol in accordance with a capillary method.

(7) calculation of content X of stereocomplex crystal

The content X of the stereocomplex crystal was calculated based on the following equation from the melting enthalpy ΔHA of a crystal melting point which appeared at 150°C or higher and lower than 190°C and the melting enthalpy ΔHB of a crystal melting point which appeared at 190°C or higher and lower than 250°C in a differential scanning calorimeter (DSC).

$$X = \{\Delta HB/(\Delta HA + \Delta HB)\} \times 100\ (\%)$$

Example 1

(polylactic acid (A))

100 parts by weight of L-lactide and 0.15 part by weight of stearyl alcohol were fed from the material feed port of a polymerization reactor equipped with a cooling distillation tube in a nitrogen stream. Subsequently, the inside of the reactor was substituted by nitrogen 5 times, and L-lactide was molten at 190°C. When L-lactide was completely molten, 0.05 part by weight of tin 2-ethylhexanoate was added from the material feed port together with 500 μl of toluene to carry out polymerization at 190°C for 1 hour.

After the end of polymerization, 0.1 part by weight of diethyloxyoxyphosphonoethyl acetate (manufactured by Johoku Chemical Co., Ltd.) was added, surplus L-lactide was volatilized, and strand-like poly-L-lactic acid (A) was obtained from the discharge port of the reactor and cut into a pellet while it was cooled.

(polylactic acid (D))

Then, the polylactic acid (D) was prepared by the same operation as above. That is, 100 parts by weight of D-lactide and 0.15 part by weight of stearyl alcohol were fed, the inside of the reactor was substituted by nitrogen 5 times, and D-lactide was molten at 190°C. When D-lactide was completely molten, 0.05 part by weight of tin 2-ethylhexanoate was added from the material feed port together with 500 μl of toluene to carry out polymerization at 190°C for 1 hour.

After the end of polymerization, 0.1 part by weight of diethyloxyoxyphosphonoethyl acetate (manufactured by Johoku Chemical Co., Ltd.) was added, surplus D-lactide was volatilized in the end, and a strand-like composition was discharged from the discharge port of the reactor and cut into a pellet while it was cooled.

50 parts by weight of the polylactic acid (A) pellet and 50 parts by weight of the polylactic acid (B) pellet obtained by the above operations were mixed together well and kneaded together at 230°C in a nitrogen gas stream for 10 minutes by using the 50C150 Labo Plastomill kneader of Toyo Seiki Seisaku-sho, Ltd. The characteristic properties of the obtained composition are shown in Table 1.

Example 2

After the composition obtained in Example 1 was pelletized and dried with a drier at 120°C for 4 hours, it was injection molded by an injection molding machine under the following conditions: a cylinder temperature of 230°C, a screw revolution of 60 rpm, a primary pressure time of 0.5 second, a metal mold temperature of 120°C and a cycle of 60 seconds.

Example 3

(polylactic acid (A))

100 parts by weight of L-lactide and 0.15 part by weight of stearyl alcohol were fed from the material feed port

of a polymerization reactor equipped with a cooling distillation tube in a nitrogen stream. Subsequently, the inside of the reactor was substituted by nitrogen 5 times, and L-lactide was molten at 190°C. When L-lactide was completely molten, 0.05 part by weight of tin 2-ethylhexanoate was added from the material feed port together with 500 μl of toluene to carry out polymerization at 190°C for 1 hour.

After the end of polymerization, 0.01 part by weight of sodium metaphosphate (neutral) (manufactured by Wako Pure Chemical Industries, Ltd.) was added, surplus L-lactide was volatilized, and strand-like polylactic acid (A) was discharged from the discharge port of the reactor and cut into a pellet while it was cooled.

(polylactic acid (D))

The polylactic acid (D) was prepared by the same operation as above. That is, 100 parts by weight of D-lactide and 0.15 part by weight of stearyl alcohol were fed, the inside of the reactor was substituted by nitrogen 5 times, and D-lactide was molten at 190°C. When D-lactide was completely molten, 0.05 part by weight of tin 2-ethylhexanoate was added from the material feed port together with 500 μl of toluene to carry out polymerization at 190°C for 1 hour.

After the end of polymerization, 0.01 part by weight of sodium metaphosphate (neutral) (manufactured by Wako Pure Chemical Industries, Ltd.) was added, surplus D-lactide was volatilized in the end, and a strand-like composition was discharged from the discharge port of the reactor and cut into a pellet while it was cooled.

50 parts by weight of the polylactic acid (A) pellet and 50 parts by weight of the polylactic acid (B) pellet obtained by the above operations were mixed together well and kneaded together at 230°C in a nitrogen gas stream for 10 minutes by using the 50C150 Labo Plastomill kneader of Toyo Seiki Co., Ltd. The characteristic properties of the obtained composition are shown in Table 1.

Example 4

After the composition obtained in Example 1 was pelletized and dried with a drier at 120°C for 4 hours, it was injection molded by an injection molding machine under the following conditions: a cylinder temperature of 230°C, a screw revolution of 60 rpm, a primary pressure time of 0.5 second, a metal mold temperature of 120°C and a cycle of 60 seconds.

Table 1

| | Example 1 (composition) | Example 2 (injection molded product) |
|---|---|---|
| Weight average molecular weight (X $10^4$) | 13.5 | 13 |
| Total content of Sn atom, Ti atom, Al atom and Ca atom (ppm) | 12 (Sn) | 12 (Sn) |
| Content of P atom (ppm) | 13.8 | 13.8 |
| (total number of gram-atoms of Sn, Ti, Al and Ca)/(number of gram-atoms of P) | 3.7 | 3.7 |
| Content of compound having a molecular weight of not more than 150 (ppm) | 320 | 400 |
| COOH terminal group concentration is not more than 30 equivalents/ton | 9 | 12 |
| Melt viscosity (shear rate $1000^{-1}$) (Pa·s)/230°C | 23 | - |

Table 2

| | Example 1 (composition) | Example 2 (injection molded product) |
|---|---|---|
| Weight average molecular weight (X $10^4$) | 12.8 | 12.5 |
| Total content of Sn atom, Ti atom, Al atom and Ca atom (ppm) | 12 (Sn) | 12 (Sn) |
| Content of P atom (ppm) | 10 | 10 |

(continued)

| | Example 1 (composition) | Example 2 (injection molded product) |
|---|---|---|
| (total number of gram-atoms of Sn, Ti, Al and Ca)/(number of gram-atoms of P) | 2.6 | 2.6 |
| Content of compound having a molecular weight of not more than 150 (ppm) | 200 | 200 |
| COOH terminal group concentration is not more than 30 equivalents/ton | 9 | 15 |
| Melt viscosity (shear rate $1000^{-1}$) (Pa·s)/230°C | 23 | - |

Effect of the Invention

The polylactic acid composition of the present invention is excellent in melt stability, long-term durability, hydrolysis resistance and injection moldability. The injection molded product of the present invention is excellent in melt stability, long-term durability and hydrolysis resistance.

## Claims

**1.** A polylactic acid composition which comprises:

(A) 30 to 70 parts by weight of polylactic acid (A) comprising not less than 90 mol% of an L-lactic acid unit and less than 10 mol% of a D-lactic acid unit and/or a comonomer unit except for lactic acid; and
(B) 70 to 30 parts by weight of polylactic acid (B) comprising not less than 90 mol% of a D-lactic acid unit and less than 10 mol% of an L-lactic acid unit and/or a comonomer unit except for lactic acid,

and which meets the following requirements (a) to (g) at the same time:

(a) it must have a weight average molecular weight of 70,000 to 700,000;
(b) the total content of Sn atom, Ti atom, Al atom and Ca atom must be 3 to 3,000 ppm;
(c) it must contain a P atom in an amount of 0.01 to 3,000 ppm;
(d) the (total number of gram-atoms of Sn, Ti, Al and Ca)/(number of gram-atoms of P) value must be 0.01 to 5;
(e) the content of a compound having a molecular weight of 150 or less must be not more than 0.2 wt%;
(f) the COOH terminal group concentration must be not more than 30 equivalents/ton; and
(g) the melt viscosity (P) at a melting temperature of 230°C must satisfy the following expression (1) :

$$10\ Pa{\cdot}s < P < 100\ Pa{\cdot}s \qquad (1).$$

**2.** An injection molded product which comprises:

(A) 30 to 70 parts by weight of polylactic acid (A) comprising not less than 90 mol% of an L-lactic acid unit and less than 10 mol% of a D-lactic acid unit and/or a comonomer unit except for lactic acid; and
(B) 70 to 30 parts by weight of polylactic acid (B) comprising not less than 90 mol% of a D-lactic acid unit and less than 10 mol% of an L-lactic acid unit and/or a comonomer unit except for lactic acid,

and which meets the following requirements (a) to (g) at the same time:

(a) it must have a weight average molecular weight of 100,000 to 500,000;
(b) the total content of Sn atom, Ti atom, Al atom and Ca atom must be 5 to 300 ppm;
(c) it must contain a P atom in an amount of 20 to 5,000 ppm;
(d) the (total number of gram-atoms of Sn, Ti, Al and Ca)/(number of gram-atoms of P) value must be 0.01 to 5;
(e) the content of a compound having a molecular weight of 150 or less must be not more than 0.1 wt%;
(f) the COOH terminal group concentration must be not more than 30 equivalents/ton; and

(g) the melt viscosity (P) at a melting temperature of 230°C must satisfy the following expression (1) :

$$10\ Pa \cdot s < P < 100\ Pa \cdot s \quad (1).$$

**3.** The molded product according to claim 2, wherein the poly-L-lactic acid unit and the poly-D-lactic acid unit form a stereocomplex crystal in the injection molded product.

**INTERNATIONAL SEARCH REPORT**

International application No.
PCT/JP2008/056824

A. CLASSIFICATION OF SUBJECT MATTER
*C08L67/04*(2006.01)i, *B29C45/00*(2006.01)i, *B29K67/00*(2006.01)n, *C08L101/16* (2006.01)n

According to International Patent Classification (IPC) or to both national classification and IPC

B. FIELDS SEARCHED

Minimum documentation searched (classification system followed by classification symbols)
C08L67/04, B29C45/00, B29K67/00, C08L101/16

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)
WPI

C. DOCUMENTS CONSIDERED TO BE RELEVANT

| Category* | Citation of document, with indication, where appropriate, of the relevant passages | Relevant to claim No. |
|---|---|---|
| P,X<br>P,A | WO 2008/29934 A1 (Teijin Ltd.),<br>13 March, 2008 (13.03.08),<br>Full text<br>(Family: none) | 1<br>2,3 |
| P,A | JP 2007-191549 A (Teijin Chemicals Ltd.),<br>02 August, 2007 (02.08.07),<br>Full text<br>(Family: none) | 1-3 |
| P,A | WO 2007/43547 A1 (Teijin Ltd.),<br>19 April, 2007 (19.04.07),<br>Full text<br>& JP 2007-99934 A & JP 2007-99939 A<br>& JP 2007-146136 A & JP 2007-146137 A | 1-3 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
22 May, 2008 (22.05.08)

Date of mailing of the international search report
03 June, 2008 (03.06.08)

Name and mailing address of the ISA/
Japanese Patent Office

Facsimile No.

Authorized officer

Telephone No.

Form PCT/ISA/210 (second sheet) (April 2007)

**INTERNATIONAL SEARCH REPORT**

International application No.
PCT/JP2008/056824

C (Continuation). DOCUMENTS CONSIDERED TO BE RELEVANT

| Category* | Citation of document, with indication, where appropriate, of the relevant passages | Relevant to claim No. |
|---|---|---|
| X<br>A | WO 2007/07893 A1 (Teijin Ltd.),<br>18 January, 2007 (18.01.07),<br>Claims; page 3, lines 20 to 27; page 18, lines 1 to 14; examples<br>& JP 2007-23393 A & JP 2007-23083 A<br>& JP 2007-70378 A & JP 2007-70736 A | 1<br>2,3 |
| X | WO 2007/07892 A1 (Teijin Ltd.),<br>18 January, 2007 (18.01.07),<br>Claims; page 4, lines 24 to 27; page 5, line 10; page 5, line 27; page 13, line 1; examples<br>& JP 2007-23081 A & JP 2007-70376 A | 1-3 |
| A | WO 2006/09285 A1 (Teijin Ltd.),<br>26 January, 2006 (26.01.06),<br>Full text<br>& CA 2575049 A1 & EP 1780234 A1<br>& CN 1989171 A & BR 2005013553<br>& KR 2007043796 & IN 2007 CN00252 A<br>& US 20080039579 A1 | 1-3 |
| A | JP 9-25400 A (Mitsubishi Rayon Co., Ltd.),<br>28 January, 1997 (28.01.97),<br>Full text<br>(Family: none) | 1-3 |
| A | JP 61-36321 A (Daicel Chemical Industries, Ltd.),<br>21 February, 1986 (21.02.86),<br>Full text<br>(Family: none) | 1-3 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006342361 A
- JP 2007009008 A